Europäisches Patentamt

European Patent Office

Office européen des brevets

(11) Numéro de publication: **0 509 588 A1**

## DEMANDE DE BREVET EUROPEEN

(21) Numéro de dépôt: **92200991.5**

(51) Int. Cl.5: **C08G 61/12**

(22) Date de dépôt: **07.04.92**

(30) Priorité: **16.04.91 BE 9100350**

(43) Date de publication de la demande:
**21.10.92 Bulletin 92/43**

(84) Etats contractants désignés:
**AT BE CH DE ES FR GB IT LI NL**

(71) Demandeur: **SOLVAY (Société Anonyme)**
**Rue du Prince Albert, 33**
**B-1050 Bruxelles(BE)**

(72) Inventeur: **Billaud, Denis**
**Rue Cardinal Mathieu, 37**

**F-5400 Nancy(FR)**
Inventeur: **Hannecart, Etienne**
**Arboretumlaan, 38**
**B-3080 Tervuren(BE)**
Inventeur: **Franquinet, Claude**
**Rue du Bon Pasteur, 51/66**
**B-1140 Bruxelles(BE)**

(74) Mandataire: **Bouchoms, Maurice et al**
**Solvay Département de la Propriété**
**Industrielle, 310, rue de Ransbeek**
**B-1120 Bruxelles(BE)**

(54) **Procédé pour la préparation de polyindoles, compositions et dispositifs électroonducteurs les contenant et utilisations des polyindoles.**

(57) L'invention concerne un procédé pour la préparation de polymères à base de polyindoles par polymérisation chimique de l'indole en présence d'un oxydant et d'un solvant.

L'invention concerne également des compositions et des dispositifs électroconducteurs contenant les polyindoles ainsi obtenus, ainsi que l'utilisation des polymères obtenus.

FIG. 1

La présente invention concerne un procédé pour la préparation de polymères à base de polyindoles par polymérisation chimique de l'indole. L'invention concerne également des compositions et des dispositifs électroconducteurs contenant les polyindoles ainsi obtenus, ainsi que les utilisations de ces polyindoles.

On a proposé dans le brevet BE 646441 un procédé de préparation de polymères aromatiques par polymérisation chimique en présence de catalyseurs Friedel-Crafts, tels que le chlorure ferrique, à une température comprise entre 100 et 800°C. Les polymères obtenus par ce procédé ont des conductivités relativement faibles comprises entre $10^{-10}$ et $10^{-0,5}$ Siemens par cm. L'obtention de polymères ayant des propriétés de conductivité électrique élevée reste un problème à ce jour.

On a maintenant trouvé un procédé pour la préparation de polyindoles par polymérisation chimique de l'indole permettant d'obtenir avec un taux de conversion élevé des polymères conducteurs homogènes, ayant des propriétés de conductivité électrique élevée et de stabilité thermique satisfaisante. Les polyindoles ainsi obtenus ont de plus des propriétés de cyclabilité particulières. Par ailleurs leur mise en oeuvre est aisée.

A cet effet, la présente invention concerne un procédé pour la préparation de polymères à base de polyindoles par polymérisation chimique de l'indole dans un milieu réactionnel comprenant au moins un oxydant et un solvant de l'indole.

Dans le milieu réactionnel, on met en oeuvre comme solvant de l'indole un ou plusieurs solvants organiques. Habituellement, on met en oeuvre comme solvant organique un halogénure d'alkyle, un alcool, un éther, un composé aromatique tel que le benzène, un nitrile ou un mélange de ces composés. De préférence, on met en oeuvre l'acétonitrile, un halogénure d'alkyle comprenant de 1 à 10 atomes de carbone, tel que notamment un halogénure d'alkyle linéaire ou ramifié contenant de 1 à 8 atomes de carbone, l'halogénure étant un chlorure, un bromure ou un fluorure, ou un mélange de deux ou plusieurs de ces composés. De manière particulièrement préférée, on met en oeuvre l'acétonitrile ou un chlorure d'alkyle linéaire contenant de 1 à 4 atomes de carbone. De manière tout particulièrement préférée, on met en oeuvre l'acétonitrile, le chloroforme ou le chlorure de méthylène. De bons résultats ont été obtenus avec le chloroforme et avec l'acétonitrile.

La quantité de solvant mis en oeuvre dans le procédé selon l'invention est supérieure à 2 ml par g d'indole. La quantité de solvant mis en oeuvre est inférieure à 500 ml par g d'indole. La quantité de solvant est généralement de 3 à 400 ml par g d'indole, habituellement de 5 à 200 ml par g d'indole et de préférence de 10 à 100 ml par g d'indole.

Dans le milieu réactionnel, on met en oeuvre comme oxydant un sel ferrique organique ou inorganique, un sel de cuivre organique ou inorganique, l'eau oxygénée, un oxyde ou un sel oxydant d'un métal des groupes VB, VIB, VIIB ou VIII du tableau périodique des éléments ou un mélange de ceux-ci. Habituellement, on met en oeuvre un sel ferrique inorganique tel qu'un chlorure, un sulfate ou un nitrate, un sel de cuivre inorganique tel qu'un chlorure, un sulfate ou un nitrate, ou un mélange de ceux-ci. De préférence, on met en oeuvre un chlorure ferrique ou un chlorure cuivrique. De bons résultats ont été obtenus avec le chlorure ferrique anhydre et le chlorure cuivrique anhydre. Les meilleurs résultats ont été obtenus avec le chlorure ferrique anhydre.

Le rapport molaire entre l'oxydant et l'indole mis en oeuvre dans le procédé selon l'invention est généralement de 1 à 15. Habituellement, ce rapport est de 1,5 à 10 et de préférence de 2 à 6.

Il est possible de réaliser le procédé selon l'invention en l'absence d'eau. Cependant on réalise, avantageusement du point de vue conductivité du polymère obtenu, le procédé dans un milieu réactionnel contenant de l'eau. La quantité d'eau introduite dans le milieu réactionnel est généralement supérieure à 0,01 ml par g d'indole. La quantité d'eau introduite dans le milieu réactionnel est généralement inférieure à 20 ml par g d'indole. Habituellement, elle est comprise entre 0,05 et 10 ml par g d'indole. De préférence elle est comprise entre 0,1 et 5 ml par g d'indole.

Généralement, on réalise le procédé dans un milieu réactionnel dont le pH est acide. Habituellement, on réalise le procédé dans un milieu réactionnel dont le pH est inférieur à 3. De préférence, on réalise le procédé dans un milieu réactionnel dont le pH est inférieur ou égal à 2.

Il est possible de réaliser le procédé selon l'invention en absence d'acide. Cependant l'addition d'acide au milieu réactionnel favorise le procédé selon l'invention, en particulier lorsque l'oxydant mis en oeuvre n'a pas un caractère acide. Généralement, on met en oeuvre un oxydant acide ou un oxydant auquel on ajoute un acide ; ainsi, lorsque l'oxydant est acide comme le chlorure ferrique, il n'est pas nécessaire d'ajouter un acide. Habituellement comme acide, on met en oeuvre HCl, $H_2SO_4$, $H_3PO_4$, $HClO_4$ ou $HNO_3$. De préférence, on met en oeuvre HCl ou $H_2SO_4$. De bons résultats ont été obtenus avec l'acide chlorhydrique.

La quantité d'acide introduit dans le milieu réactionnel en vue d'obtenir le pH souhaité dépend de la nature et de la quantité d'oxydant utilisé et également de la nature de l'acide mis en oeuvre.

Le procédé est réalisé habituellement sous atmosphère d'air, d'argon ou d'azote et, de préférence, sous atmosphère d'azote.

La température à laquelle est réalisé le procédé selon l'invention, est un paramétre important pour le procédé selon l'invention. La température à laquelle est réalisé le procédé selon l'invention est généralement comprise entre - 20 et 90° C, habituellement entre 0 et 60° C et de préférence entre 5 et 40° C lorsqu'on opère à pression atmosphérique. De bons résultats ont été obtenus entre 10 et 25° C.

La pression à laquelle est réalisé le procédé est généralement comprise entre 0,1 et 10. $10^5$ Pa et de préférence elle est égale à la pression atmosphérique.

Le procédé selon l'invention peut avantageusement être réalisé en suivant les étapes suivantes :

- lors d'une première étape, on introduit dans le réacteur sous atmosphère d'azote une fraction de la quantité nécessaire de solvant et d'oxydant ;
- lors d'une deuxième étape, on ajoute, sous agitation, l'indole dissous dans la quantité complémentaire de solvant, pour obtenir le polymère ;
- lors d'une troisième étape le polymère obtenu est séparé, lavé, puis séché.

Lors de ce procédé, il est avantageux d'introduire l'indole dissous dans le solvant de façon continue et régulière.

Le procédé selon l'invention peut également être réalisé en suivant les étapes suivantes :

- lors d'une première étape, on introduit dans le réacteur, sous agitation, l'indole dissous dans la quantité nécessaire de solvant ;
- lors d'une deuxième étape, on ajoute sous atmosphère d'azote la quantité complémentaire de solvant et l'oxydant, pour obtenir le polymère ;
- lors d'une troisième étape le polymère obtenu est séparé, lavé, puis séché.

L'eau et/ou l'acide sont introduits éventuellement avant ou pendant l'introduction de l'indole dans le réacteur.

Lors de la troisième étape le polymère est séparé par filtration, lavé avec de l'eau ou de l'acétonitrile, de préférence avec de l'eau, puis séché.

Le procédé selon l'invention peut être réalisé dans tout appareillage ou tout réacteur permettant de réunir les conditions opératoires décrites ci-avant.

Les polyindoles obtenus peuvent être dédopés de manière connue par l'homme du métier. Ces polymères dédopés peuvent être aisément mis en solution, tel que notamment dans le tétrahydrofurane, et déposés en couches très minces de l'ordre du μm ou sous forme de films de 0,2 à quelques dizaines de microns sur divers supports tels que verres, polymères, métaux, textiles, matières plastiques, verres métallisés. Les films conducteurs obtenus sont adhérents, homogènes et très conducteurs.

Les polyindoles obtenus peuvent également être aisément dispersés dans des résines polymériques diverses, et mis en oeuvre facilement. En effet les polyindoles et leurs mélanges avec des polymères thermoplastiques, tels que le chlorure de polyvinyle ou le polyéthylène notamment, peuvent être malaxés et estampés à chaud pour obtenir des plaques ou objets composites. Ces plaques ou objets composites présentent une bonne résistance mécanique, sont homogènes, lisses et rigides. Ces plaques ou objets composites peuvent notamment être utilisés lors de la fabrication de blindage électromagnétique.

Les plaques ou objets composites peuvent être chargés par des charges diverses telles que des fibres de verre, du noir de carbone, du carbonate de calcium ou des particules métalliques.

L'invention concerne donc également des compositions comprenant un ou plusieurs polyindoles et un ou plusieurs polymères thermoplastiques, ainsi que les dispositifs électroconducteurs comprenant ces compositions. Les polymères thermoplastiques ayant donné de bons résultats sont le chlorure de polyvinyle et le polyéthylène. Ces compositions sont obtenues par mélange du ou des polyindoles avec un ou plusieurs polymères thermoplastiques.

Les polyindoles et les compositions comprenant des polyindoles selon l'invention peuvent être utilisés pour leurs propriétés de conductivité électrique, d'absorption électromagnétique et de conductivité thermique et, plus particulièrement, pour la réalisation de dispositifs électroconducteurs.

Les polyindoles selon l'invention présentent un ensemble de propriétés tout à fait remarquables qui sont principalement :

- une réversibilité et une stabilité exceptionnelle du cycle d'oxydo-réduction entre les formes oxydées et réduites,
- une cyclabilité remarquable,
- des absorptions importantes dans le domaine des rayonnements électromagnétiques,
- une variation importante des caractéristiques spectrales obtenue avec une variation de potentiel faible, ce qui rend intéressante et économique leur utilisation en tant que matériau électrochromique.

Ces propriétés remarquables des polymères les rendent particulièrement utilisables pour la réalisation de dispositifs électroconducteurs dont le principe est basé sur ces propriétés et qui constituent également un objet de la présente invention.

A titre d'exemples non limitatifs de dispositifs électroconducteurs contenant des polyindoles selon l'invention, on peut citer :

- les électrodes,
- les blindages électromagnétiques,
- les dispositifs électrochromiques basés sur la modification du spectre optique desdits polymères selon leur état électrochimique, qui se manifeste lors des cycles d'oxydation et de réduction des films de polymères déposés sur les anodes (respectivement sur les cathodes) de ces dispositifs lors de la charge et de la décharge ; à titre d'exemples de pareils dispositifs électrochromiques, on peut citer les écrans d'affichage, les dispositifs optoélectroniques, les mémoires et commutateurs optiques.

L'invention est illustrée par les exemples suivants.

Exemple 1

Comme réacteur, on utilise un ballon de 500 ml à 4 cols, le premier col est muni d'un robinet à 3 voies, le second d'un thermomètre, 1e troisième d'un réservoir à robinet de 250 ml surmonté d'un robinet à 3 voies et le quatrième d'un septum permettant de planter une aiguille reliée à une seringue doseuse de 50 ml.

Ce ballon équipé d'un agitateur est placé dans un bain thermostatique et est purgé par un cycle de 3 mises sous vide et 3 rinçages à l'azote pur et sec.

Dans ce ballon maintenu à 15°C sous azote, on introduit 180 ml de chloroforme préalablement dégazé à l'azote, puis sous agitation on ajoute 25 g de chlorure ferrique anhydre. Ensuite on remplit la seringue doseuse avec 5 ml d'eau déminéralisée et dégazée puis le réservoir à robinet avec 20 ml de chloroforme et 3,6 g d'indole dégazé.

On introduit en parallèle et en 10 minutes dans le ballon l'eau à l'aide de la seringue, le chloroforme et l'indole à l'aide du réservoir à robinet. Le rapport molaire entre le chlorure ferrique et l'indole est de 5.

Le ballon est encore maintenu à 15°C pendant 5 heures sous agitation, le pH du milieu réactionnel est de 1.

Puis on introduit dans le ballon, maintenu à 15°C, 50 ml d'eau en 45 minutes.

Le produit, qui se présente à ce stade sous la forme d'une suspension, est filtré sous air à 20°C.

Le produit obtenu est lavé 4 fois avec 100 ml d'eau à 20°C, puis séché sous vide à 20°C sous 2670 Pa durant une nuit.

On obtient 3,75 g d'une poudre brune.

Cette poudre est pressée à 20°C durant quelques minutes sous une pression de $19,6.10^7$ Pa. La plaquette obtenue a une conductivité de $1,5. 10^{-1}$ Siemens par cm.

Le taux de conversion calculé comme étant la rapport entre le polymère non dopé obtenu et le monomère mis en oeuvre est d'environ 90 %.

Exemple 2

Le produit obtenu après filtration à l'exemple 1, est lavé 2 fois avec 100 ml d'eau à 20°C, puis traité par 250 ml de NaOH pendant 30 minutes.

Ensuite le produit est lavé 3 fois avec 200 ml d'eau.

Le produit lavé est filtré sous air à 20°C, puis séché sous vide à 20°C et sous 2670 Pa durant une nuit.

On obtient une poudre de polyindole dédopé.

4 g de cette poudre sont mis en solution dans 100 ml de tétrahydrofurane. La solution est agitée durant 1 heure à température ambiante.

La solution est ensuite centrifugée à 10.000 tours par minute pendant 10 minutes.

Une plaque de verre conducteur [verre ITO (oxyde étain indium) ou verre recouvert d'un dépôt de 1000 Å d'or de 14 sur 8 cm] est ensuite recouverte par la solution obtenue. La plaque ainsi recouverte est centrifugée à la tournette (250 tours par minute pendant 1 minute).

La plaque est ensuite séchée à 20°C durant 10 minutes sous environ 1335 Pa.

On obtient une couche de polyindole très régulière et homogène de l'ordre de 0,5 $\mu$m.

1 $cm^2$ de la plaque ainsi obtenue, plaque recouverte d'or et de polyindole, est utilisée comme électrode. La contre-électrode est un fil de platine et l'électrode de référence est une électrode à calomel saturée en KC1 (ESC).

L'électrolyte est une solution de $LiClO_4$ (0,3 M) dans l'eau. On met en oeuvre environ 25 ml d'électrolyte.

Le polyindole est soumis à un cyclage redox entre - 0,28 et + 0,87 V versus ESC, les propriétés électrochimiques du polyindole ont été mesurées à partir du voltammogramme cyclique enregistré au moyen d'un potentiostat PAR modèle 173 et à partir des pics d'intensité enregistrés.

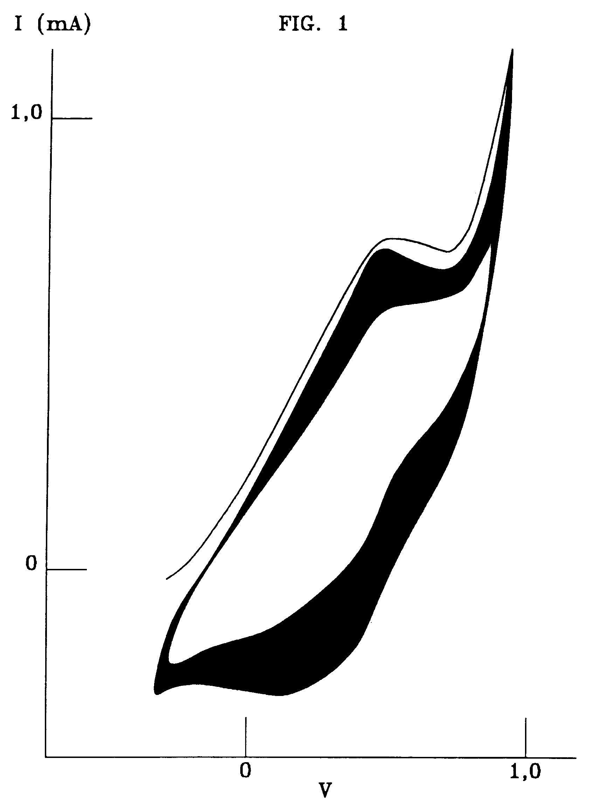

La figure 1 représente les cyclovoltampérogrammes initiaux du système électrochimique. La mise en route a nécessité une activation préalable de plusieurs cycles. La vitesse de balayage est de 20 mV/s.

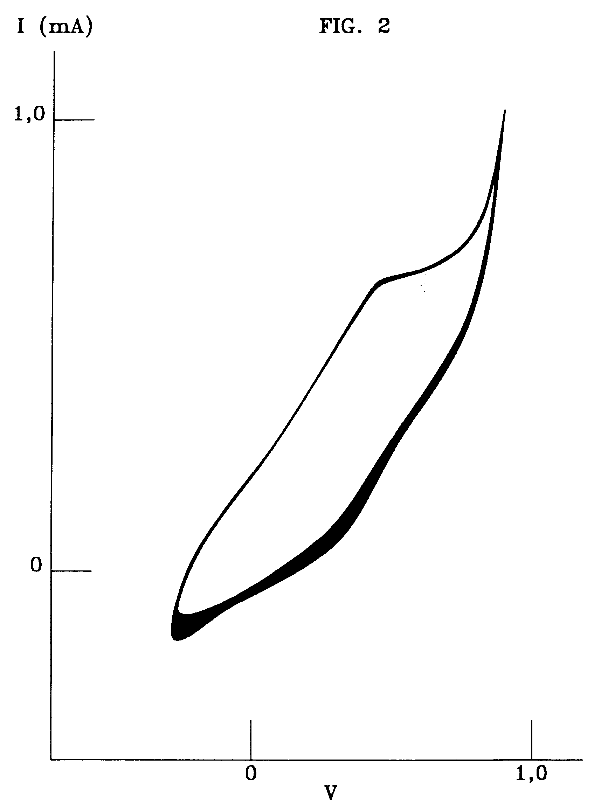

La figure 2 représente les voltampérogrammes obtenus après 120.000 cyclages. La vitesse de balayage est de 20 mV/s. Les caractéristiques principales de ces cycles sont conservées : potentiel de transformation voisin de 400 mV, pics anodiques et cathodiques rapprochés (195 mV environ).

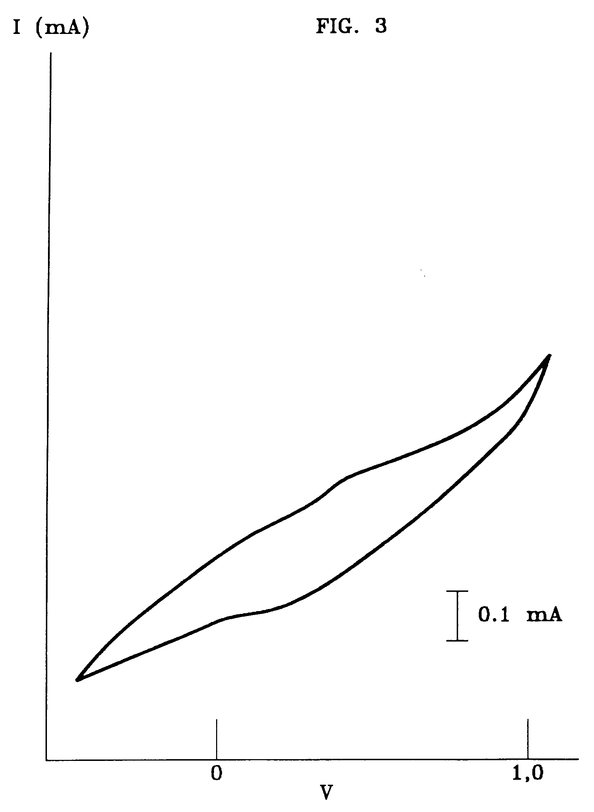

La figure 3 représente le voltampérogramme enregistré à 20 mV/s au bout de 250.000 cycles. La vitesse de cyclage entre 120.000 et 250.000 cycles a été portée à 500 mV/s.

L'unité de l'abscisse est le volt (V en volt versus ESC), l'unité de l'ordonnée est le microampère (I en mA).

Exemple 3

Dans un réacteur identique à celui décrit à l'exemple 1, on introduit sous atmosphère d'azote à température ambiante 180 ml d'acétonitrile et 10,3 g de $CuCl_2$ anhydre (0,076 mole).

Ensuite on remplit la seringue doseuse avec 2 ml d'eau déminéralisée et dégazée puis le réservoir à robinet avec 20 ml d'acétonitrile et 3,6 g d'indole dégazé (0,03 mole).

On introduit en parallèle et en 10 minutes dans le ballon l'eau à l'aide de la seringue, l'acétonitrile et l'indole à l'aide du réservoir à robinet. Le rapport molaire entre $CuCl_2$ et l'indole est de 2,5.

Le ballon est encore maintenu à 20°C pendant 5 heures sous agitation, le pH du milieu réactionnel est de 2.

Le produit est ensuite filtré sous air à 20°C.

Le produit obtenu est lavé 4 fois avec 100 ml d'eau à 20°C, puis séché sous vide à 20°C sous 2670 Pa durant une nuit. On obtient 2,4 g d'une poudre brune.

Cette poudre est pressée à 20°C durant quelques minutes sous une pression de $19,6.10^7$ Pa. La plaquette obtenue a une conductivité de $2.10^{-2}$ Siemens par cm.

Le taux de conversion calculé comme étant le rapport entre le polymère non dopé obtenu et le monomère mis en oeuvre est d'environ 60 %.

Exemple 4

Du polyéthylène [PE vendu sous la dénomination ELTEX B 5920 de masse volumique 0,950 g/cm$^3$ à 20°C et de HLMI (High Load Merck Index) de 10 g/10 minutes] est mélangé avec du polyindole tel qu'obtenu à l'exemple 1 selon les proportions pondérales résumées dans le tableau 1.

Chaque mélange est malaxé 3 minutes à 150°C puis introduit dans une presse où il subit un estampage à 150°C durant 1 minute sous une pression de $9,8.10^7$ Pa.

Les résultats de conductivité des plaques obtenues sont rassemblés dans le tableau 1.

Les plaques sont conductrices, homogènes, lisses et rigides.

Tableau 1

| Rapport pondéral | | plaque |
|---|---|---|
| polyindole | polyéthylène | conductivité S/cm |
| 70 | 30 | $0,6.10^{-2}$ |
| 50 | 50 | $1.10^{-3}$ |
| 30 | 70 | $2.10^{-4}$ |
| 10 | 90 | $1.10^{-4}$ |

**Revendications**

1. Procédé pour la préparation de polymères à base de polyindoles à partir d'indole caractérisé en ce que l'indole est polymérisé par voie chimique dans un milieu réactionnel comprenant au moins un oxydant et un solvant.

2. Procédé selon la revendication 1 caractérisé en ce que le milieu réactionnel a un pH acide.

3. Procédé selon la revendication 1 ou 2 caractérisé en ce que l'oxydant est choisi parmi les oxydants acides ou que le milieu réactionnel comprend un acide.

4. Procédé selon l'une quelconque des revendications précédentes caractérisé en ce que le milieu réactionnel comprend en outre de l'eau.

5. Procédé selon l'une quelconque des revendications précédentes caractérisé en ce que l'on met en oeuvre comme solvant le chloroforme ou l'acétonitrile.

6. Procédé selon l'une quelconque des revendications précédentes caractérisé en ce que l'on met en oeuvre comme oxydant le chlorure ferrique anhydre ou le chlorure cuivrique anhydre.

7. Procédé selon l'une quelconque des revendications précédentes caractérisé en ce que la température est comprise entre 10 et 25°C.

8. Procédé selon l'une quelconque des revendications précédentes caractérisé en ce qu'il comprend les étapes suivantes :
   - lors d'une première étape, on introduit dans le réacteur sous atmosphère d'azote une fraction de la quantité nécessaire de solvant et d'oxydant ;
   - lors d'une deuxième étape, on ajoute, sous agitation, l'indole dissous dans la quantité complémentaire de solvant, pour obtenir le polymère ;
   - lors d'une troisième étape, le polymère obtenu est séparé, lavé, puis séché.

9. Composition comprenant un ou plusieurs polyindoles et un ou plusieurs polymères thermoplastiques.

10. Procédé pour la préparation d'une composition selon la revendication 9 caractérisé en ce que le polymère obtenu selon l'une quelconque des revendications 1 à 8 est mélangé avec un polymère thermoplastique, tel que le chlorure de polyvinyle ou le polyéthylène, et que le mélange ainsi obtenu est malaxé puis estampé à chaud.

11. Dispositifs électroconducteurs comprenant un polymère obtenu selon l'une quelconque des revendications 1 à 8 ou une composition selon la revendication 9.

12. Utilisation des polymères obtenus selon l'une quelconque des revendications 1 à 8 pour former un film conducteur.

I (mA)    FIG. 1

FIG. 2

FIG. 3

I (mA)

0.1 mA

0          1,0

V

Office européen
des brevets

**RAPPORT DE RECHERCHE EUROPEENNE**

Numero de la demande

EP    92 20 0991

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | WO-A-9 001 919 (THE GILETTE CO.) <br> * revendications 1,2 * <br> --- | 1 | C08G61/12 |
| A | EP-A-0 350 083 (SOLVAY) <br> --- | | |
| A | EP-A-0 336 468 (SOLVAY) <br> --- | | |
| A | CHEMICAL ABSTRACTS, vol. 101, no. 14, 1 Octobre 1984, Columbus, Ohio, US; abstract no. 111446Y, WALTMAN R.J. ET. AL.: 'Substituent effect in the electropolymerization of aromatic heterocyclic compounds' page 3 ; & J. PHYS. CHEM. 1984, 88(19), 4343-6 * abrégé * <br> --- | | |
| A | CHEMICAL ABSTRACTS, vol. 114, no. 6, 11 Février 1991, Columbus, Ohio, US; abstract no. 43606S, HAMANN C.H. ET AL.: 'Electropolymerization of indole and indole derivatives.' page 2 ; & DECHEMA MONOGR. 1990, 121(WERKST. ELEKTROCHEM.), 297-309 * abrégé * | | **DOMAINES TECHNIQUES RECHERCHES (Int. Cl.5)** <br><br> C08G |
| | ----- | | |

Le présent rapport a été établi pour toutes les revendications

| Lieu de la recherche | Date d'achèvement de la recherche | Examinateur |
|---|---|---|
| LA HAYE | 18 JUIN 1992 | STIENON P.M.E. |

**CATEGORIE DES DOCUMENTS CITES**

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P0402)